# FASCICULE DE BREVET EUROPEEN

(11) **EP 1 323 516 B1**
(45) Date de publication et mention de la délivrance du brevet: **29.06.2005**
(21) Numéro de dépôt: 02027745.5
(22) Date de dépôt: 11.12.2002
(51) Int. Cl.: B29D 30/20, B29D 30/38

(54) **Procédé de fabrication d'un pneumatique**
Verfahren zur Reifenherstellung
Process for manufacturing tyres

(30) Priorité: 28.12.2001 FR 0117134
(43) Date de publication de la demande: 02.07.2003
(73) Titulaire: Société de Technologie Michelin, 63000 Clermont-Ferrand (FR); Michelin Recherche et Technique S.A., 1763 Granges-Paccot (CH)
(72) Inventeur: Boiteau, Alain, 63119 Chateaugay (FR)
(74) Mandataire: Bauvir, Jacques

(56) Documents cités:
- EP-A- 1 108 526
- FR-A- 977 916
- US-A- 1 770 895
- US-A- 1 933 692
- US-A- 2 754 887
- US-A- 3 038 827
- US-A- 3 534 953
- US-A- 4 256 522
- US-A- 5 062 462
- US-A- 6 109 322

## Description

La présente invention concerne un procédé de fabrication de pneumatiques.

L'invention concerne plus particulièrement la fabrication d'un pneumatique comprenant une armature de carcasse, au moins une tringle de renforcement dans chacun des bourrelets du pneumatique autour de laquelle l'armature de carcasse est enroulée en formant un retournement, ledit pneumatique étant tel que, contrairement à ce qui est généralement réalisé, le retournement de l'armature de carcasse soit disposé entre la tringle et l'armature de carcasse elle-même. Pour une plus complète compréhension du pneumatique, on peut se référer notamment à la demande de brevet FR-2 716 645 (figure 2).

Il existe plusieurs catégories de procédés permettant la fabrication de pneumatiques : certains font appel à plusieurs tambours d'assemblage utilisés successivement, d'autres font appel à des tambours d'assemblage ayant une surface de réception dont la partie centrale est cylindrique et dont les extrémités ont des épaulements, d'autres encore utilisent une virole pour obtenir un produit semi-fini cylindrique nommé couramment « pocket » préalablement à l'utilisation d'un tambour d'assemblage. Quel que soit le procédé choisi, l'opération de retournement de l'armature de carcasse autour des tringles, si bien sûr on souhaite la réaliser, ne s'effectue que lorsque l'armature de carcasse est positionnée sur un tambour d'assemblage.

Un tel retournement est réalisé grâce à des dispositifs de retroussage de l'armature de carcasse solidaires ou non du tambour d'assemblage. On peut citer, à titre d'exemple, la publication US 3 698 987 qui décrit un dispositif de retroussage comprenant une première vessie gonflable ayant l'allure générale d'un tore, et dont le déplacement nécessaire pour effectuer l'opération de retroussage est réalisé grâce à un élément intermédiaire constitué par une seconde vessie gonflable ou une virole métallique qui effectue une poussée transversale sur la première vessie. Dans le brevet US 4 087 306, le dispositif de retroussage est constitué par une vessie de retroussage qui développe par elle-même, sous le seul effet de l'élévation de la pression de gonflage, le mouvement de roulement dans le sens transversal nécessaire pour effectuer le retroussage de l'armature de carcasse.

Ces tambours et dispositifs de retroussage permettent la fabrication de pneumatiques en mettant en oeuvre une étape de procédé consistant, une fois l'armature de carcasse positionnée sur le tambour non gonflé, c'est-à-dire à son développement circonférentiel le plus petit, et les tringles en regard axialement de leur position d'immobilisation par rapport à la carcasse, à gonfler le tambour afin de figer le positionnement des tringles sur l'armature de carcasse, puis à actionner le dispositif de retroussage permettant de réaliser le retournement de chaque extrémité latérale de l'armature de carcasse autour de la tringle correspondante.

De tels tambours ne se prêtent pas à une modification dans le procédé de fabrication qui viserait à ce que le retournement de l'armature de carcasse soit situé sous la tringle. Dans la mesure où le fonctionnement du dispositif de retroussage est assujetti à la présence d'un point fixe, constitué par la tringle, autour duquel est réalisé le retournement de l'armature de carcasse, on ne voit pas comment on pourrait retourner l'armature de carcasse en utilisant la tringle pour imposer l'endroit de la pliure, tout en enfilant le retournement radialement sous ladite tringle.

Certains tambours spécifiques tels que celui décrit dans la publication FR-2 777 827 ou encore dans la publication EP 0 953 435, comprennent des dispositifs de retroussage constitués par des doigts s'étendant radialement et déplaçables radialement de sorte à laisser libre les extrémités d'une armature de carcasse dont le retournement peut alors être réalisé par les tringles elles-mêmes apportées par un guide déplaçable radialement. Un tel tambour nécessite une mécanique importante et complexe pour faire le retournement.

L'invention a donc pour objet un procédé de fabrication simple de pneumatiques permettant notamment la fabrication de pneumatiques dans lesquels le retournement de l'armature de carcasse peut être positionné entre la tringle et ladite armature.

Selon l'invention, le procédé de fabrication d'un pneumatique, comprend les étapes suivantes :
- déposer une armature de carcasse (A) sur une surface de réception généralement plane (1),
- retourner au moins une extrémité (A') de l'armature de carcasse (A) sur elle-même,
- poser dans le sens circonférentiel le produit semi-fini (SF) ainsi réalisé sur une surface de réception généralement cylindrique (2) en faisant un tour complet,
- réaliser la soudure des bords opposés dans la direction circonférentielle (A1, A2) du produit semi-fini (SF),
- et positionner respectivement une tringle (T) sur chaque retournement ainsi réalisé.

L'invention concerne également un procédé dans lequel l'étape de pose dans le sens circonférentiel du produit semi fini sur une surface généralement cylindrique en faisant un tour complet, est précédé des étapes suivantes :
- déposer une partie d'une nappe de carcasse continue sur une surface de réception généralement plane,
- retourner au moins une extrémité de cette partie de nappe sur elle-même,
- couper à longueur le produit semi-fini ainsi réalisé.

L'intérêt de l'invention résidant dans le fait que l'opération de retournement de la nappe sur elle-même peut se faire avantageusement avant l'étape de pose de ce produit semi-fini sur une surface de réception généralement cylindrique tout en permettant de positionner aisément ce retournement entre la tringle et l'armature de carcasse. D'autres avantages et caractéristiques de l'invention apparaîtront à la lecture d'un exemple de mise en oeuvre du procédé conforme à l'invention en référence aux dessins dans lequel :
- les figures 1A à 1F sont des représentations schématiques en perspective illustrant les étapes du procédé,
- la figure 2 est une représentation schématique perspective du produit semi-fini entrant dans la fabrication d'un pneumatique représenté sur la figure 1B selon une variante de réalisation,
- la figure 3 est une représentation schématique perspective du produit semi-fini entrant dans la fabrication d'un pneumatique représenté sur la figure 1B selon une deuxième variante de réalisation,
- la figure 4 est une coupe radiale partielle schématique d'un bourrelet d'un premier type de pneumatique pouvant être réalisé à l'aide du procédé conforme à l'invention,
- la figure 5 est une représentation schématique en perspective de l'étape de procédé représentée sur la figure 1D selon une première variante de réalisation du procédé conforme à l'invention,
- la figure 6 est une représentation schématique en perspective de l'étape de procédé représentée sur la figure 1D selon une deuxième variante de réalisation du procédé conforme à l'invention,
- la figure 7 est une représentation schématique en perspective de l'étape de procédé représentée sur la figure 1A selon une variante de réalisation du procédé conforme à l'invention.

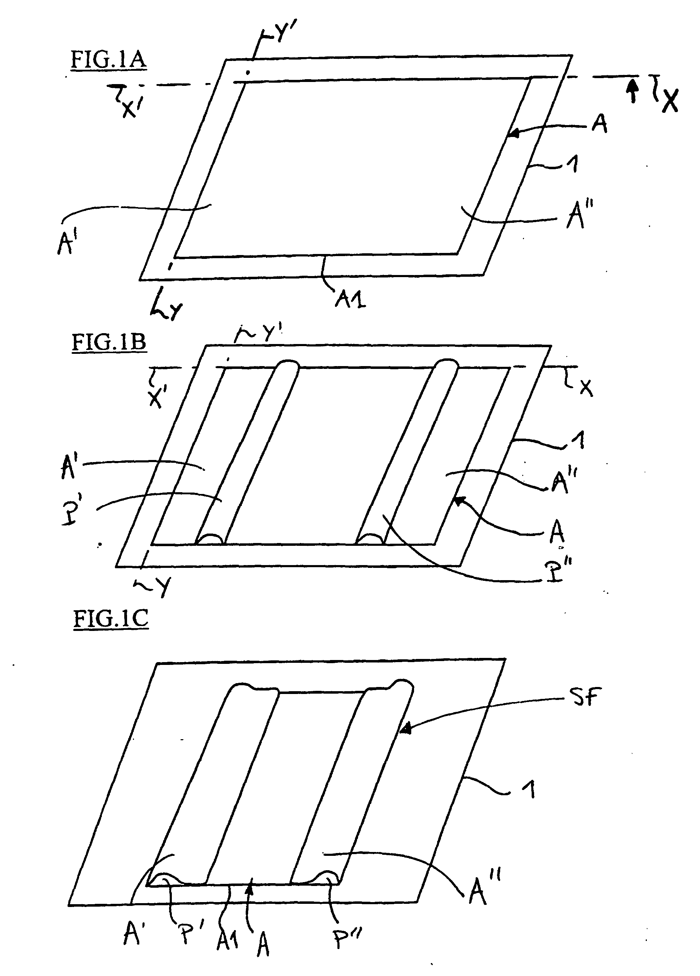

Selon les figures 1A à 1F, le procédé conforme à l'invention comprend les étapes suivantes :

On dépose sur une surface généralement plane 1, telle que la surface d'une table de réception, une nappe de câbles textiles qui constitue, dans l'exemple décrit ici, à elle seule l'armature de carcasse A, comme on le voit sur la figure 1A.

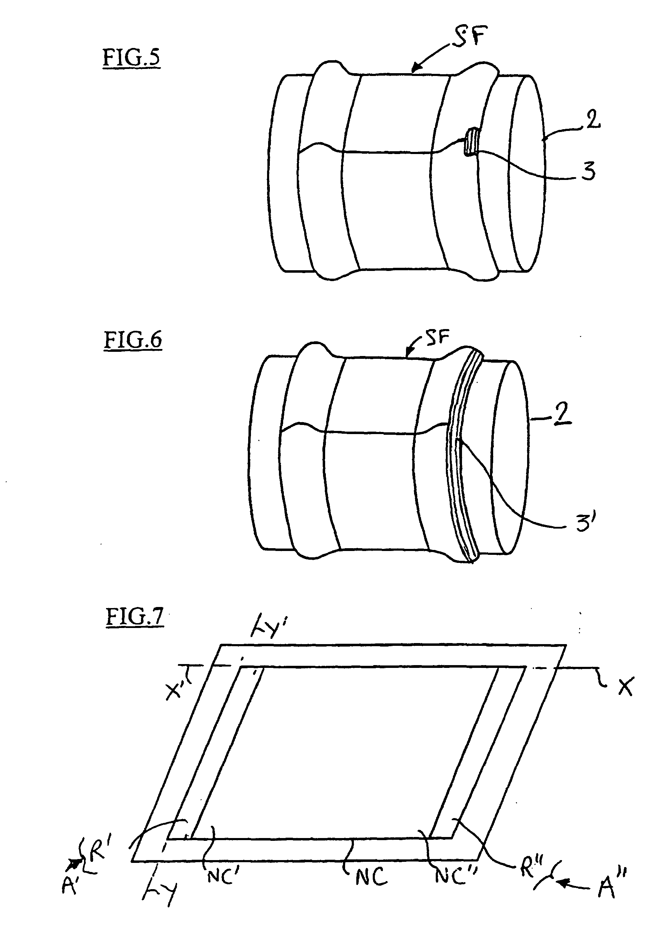

On notera X'X et Y'Y les axes perpendiculaires de la surface plane 1 afin de faciliter les repérages sur les figures 1A à 1C ainsi que sur les figures 5 à 7.

Notons que l'armature de carcasse considérée peut être constituée par une nappe de câbles NC dont deux des extrémités latérales opposées NC' et NC" dans la direction X'X portent des profilés de mélanges caoutchouteux longitudinaux R' et R" (ou de bandes de mélanges caoutchouteux comportant des câbles) disposés sous la nappe par rapport au positionnement de cette dernière sur la table 1, de sorte que ces profilés R' et R" dépassent extérieurement dans la direction X'X par rapport à la nappe le long de chacune des extrémités de nappe précitées, comme le montre la figure 7. Dans ce qui suit, on entendra par extrémités opposées latérales A' et A" dans la direction X'X, les extrémités de l'armature de carcasse A que ces dernières soient constituées par les extrémités de la nappe elle-même ou rapportées par rapport à cette dernière.

Notons que sur les figures l'armature de carcasse a des bords parallèles aux directions X'X et Y'Y mais l'invention ne saurait se limiter à ces exemples, l'armature de carcasse pouvant être coupée à angle.

Selon le type de pneumatique à réaliser, on dépose ensuite deux profilés de mélange caoutchouteux P' et P" respectivement sur les zones d'extrémité latérales A' et A" opposées de l'armature de carcasse A, tels que représentés sur la figure 1B. Ces profilés P' et P" sont représentés sur les figures avec une section ayant la forme d'un demi-cercle mais il est clair qu'on peut envisager d'autres formes de section.

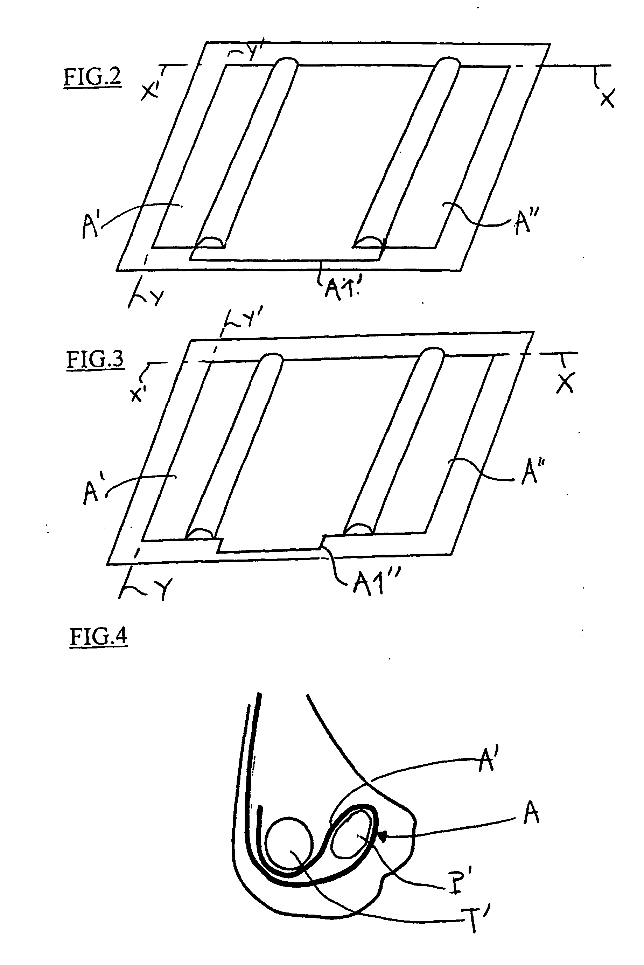

La présence de ces profilés permet notamment de réaliser un pneumatique qui comprend une armature de carcasse, deux bourrelets comportant chacun au moins une tringle de renforcement et dans lesquels l'armature de carcasse forme un retournement disposé entre la tringle et l'armature de carcasse elle-même, et dont un des bourrelets est représenté schématiquement en coupe sur la figure 4. Cet exemple ne saurait limiter toutefois la portée de l'invention à la fabrication du type de pneumatique décrit ci-dessus.

Notons en particulier que l'on peut passer directement à l'étape du procédé réalisant les retournements des extrémités de nappes et représentée sur la figure 1C afin de réaliser des architectures distinctes.

Ce procédé permet également de réaliser d'autres types de pneumatiques et notamment des pneumatiques dans lesquels les deux bourrelets du même pneumatique ont des diamètres différents.

On procède alors au retournement des extrémités de nappes A' et A" sur elles-mêmes ou autour des profilés P' et P" selon la figure 1C. Ce retournement peut être réalisé par tout moyen tel qu'un dispositif de retroussage (membranes de retroussage, doigts...) qui peut être porté par la table elle-même ou rapporté. Il peut être intéressant de prévoir un dispositif de maintien en position de la zone de l'armature de carcasse proche de l'extrémité à retourner et devant rester à plat y compris dans le cas de figure où il n'y a pas de profilés.

L'étape de retournement peut être unique mais on peut également envisager plusieurs retournements successifs de l'extrémité de l'armature de carcasse notamment pour obtenir une architecture. Ce procédé offre, en effet, de très nombreuses possibilités dans les retournements et ajout de produits possibles sur l'armature de carcasse avant la pose des tringles.

On réalise ainsi à ce stade un produit semi-fini auquel il sera, bien entendu, possible d'ajouter d'autres produits tels que, par exemple, des produits à base de mélanges caoutchouteux ou des renforts comportant des fils noyés dans une nappe de mélanges caoutchouteux, avant son transport sur un tambour d'assemblage.

Dans l'exemple représenté sur la figure 1C, les bords latéraux A1 et A2, opposés dans la direction Y'Y de l'armature de carcasse et adjacents aux extrémités A' et A" retournées, sont alignés avec lesdits retournements. Cependant on peut envisager que l'armature de carcasse porte des encoches aux coins de l'un de ses bords A1 de sorte que le bord A1 dépasse extérieurement par rapport au centre de l'armature de carcasse dans la direction Y'Y par rapport aux retournements des extrémités A' et A" tel que cela est représenté sur la figure 2. La taille des encoches peut être plus importante que sur la figure 2 de sorte que le bord A1 ait une longueur inférieure à celle de l'armature de carcasse dans sa partie centrale tel que représenté sur la figure 3.

Ces variantes de réalisation du bord A1 de l'armature de carcasse modifie comme on va le voir plus en détails dans ce qui suit, la zone de soudure de l'armature de carcasse sur elle-même.

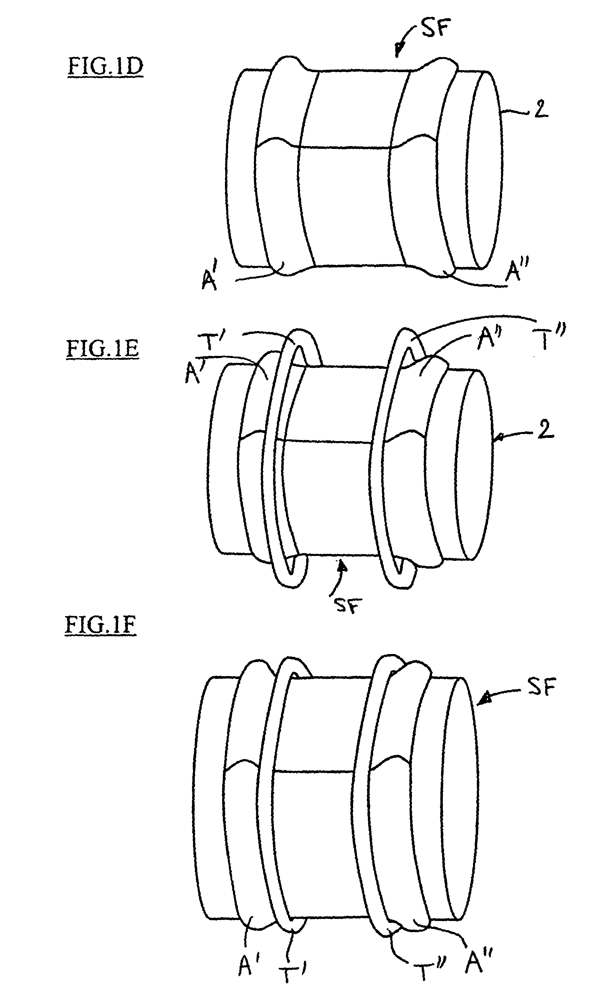

Ce produit semi-fini qu'on nommera SF va alors être posé sur une surface généralement cylindrique 2 telle que celle d'un tambour d'assemblage, comme le montre la figure 1D.

On peut envisager de poser ce produit SF en sens inverse c'est-à-dire que les retournements soient au contact de la surface 2.

Pour réaliser cette opération de transport de produit on peut prévoir des couloirs de guidage montés directement en sortie de la table de réception et destiné à alimenter le tambour d'assemblage ou prévoir un stockage intermédiaire des produits semi-finis.

On termine la pose du produit semi-fini SF sur le tambour d'assemblage par la réalisation d'une soudure qui, dans l'exemple représenté sur la figure 1D consiste en une soudure « bord à bord » de la zone centrale de l'armature de carcasse A et des extrémités retournées. Notons qu'en pratique la déformation naturelle de l'armature de carcasse peut provoquer une légère courbure du bord A1 lors de son enroulement, on considérera néanmoins qu'il s'agit de soudure bord à bord.

Il est clair que dans le cas des variantes représentées sur les figures 2 et 3, il y a un recouvrement sur l'ensemble de la longueur du bord A1, les extrémités extérieures dans la direction X'X des zones de retournements avec ou sans profilés étant soudées bord à bord comme dans la variante précédente.

Cette soudure bord à bord des extrémités extérieures dans la direction XX' des zones de retournement tend naturellement à s'ouvrir et afin de maintenir cette soudure fermée jusqu'à la phase de cuisson, pour garantir la qualité du pneumatique obtenu, il est intéressant de prévoir un élément de liaison mécanique, disposé sur la soudure, qui peut être provisoire ou, préférentiellement, rester dans le pneumatique cuit. Cet élément de liaison mécanique peut être une agrafe réalisée en un matériau compatible avec les mélanges caoutchouteux, un dispositif mécanique tel que des griffes permettant d'assurer la jonction jusqu'à la mise du pneumatique dans le moule, ou encore, ainsi que cela est décrit à titre d'exemple dans le procédé, une petite bande 3 de mélange caoutchouteux comprenant des fils, textiles ou métalliques, parallèles entre eux dans la direction longitudinale de la dite bande, et collée en disposant les fils de la bande 3 dans le sens circonférentiel par rapport au tambour, tel que représenté sur la figure 5 sur un seul des retournements. On peut également envisager une bande 3' disposée dans le même sens et qui s'étend sur toute la circonférence de l'armature de carcasse, comme le montre la figure 6.

Après la pose éventuelle d'autres produits constitutifs du pneumatique, Des tringles T et T' sont amenées par l'intermédiaire de guides (figure 1E). Ces guides portant les tringles T' et T" sont alors avancés axialement vers l'armature de carcasse A jusqu'à ce qu'elles atteignent le positionnement désiré par rapport à l'armature de carcasse et, plus précisément, par rapport aux retournements portés par ladite armature.

Dans cet exemple de fabrication, on synchronise alors l'avancée des guides avec une expansion du tambour. Une fois les tringles T' et T" en position axiale correspondant à la position définitive souhaitée, on lâche les tringles et on finit l'expansion du tambour jusqu'à sa position expansée afin de fixer axialement et radialement la position des tringles, comme on le voit sur la figure 1F.

On pose ensuite les autres produits constitutifs du pneumatique. De nombreuses méthodes sont disponibles à l'homme du métier, c'est pourquoi il est inutile d'aborder cet aspect de la fabrication dans le contexte de la présente invention. On procède enfin à la vulcanisation du pneumatique.

Comme on l'a vu précédemment ce procédé qui est simple à mettre en oeuvre permet la fabrication de pneumatiques dont les bourrelets ont des architectures à la fois diverses et complexes.

Notons que selon une variante du procédé, ce dernier peut être réalisé de façon continue à partir d'une nappe de carcasse sur bobine qui serait déroulée. Une partie de cette nappe reposant sur une surface plane sur lequel s'effectuerait un retournement d'une ou des extrémités opposées de la nappe en continu. Ce produit semi-fini serait alors coupé à longueur pour être déposé sur une surface cylindrique. La suite du procédé est alors identique à la variante précédemment décrite.

## Revendications

1. Procédé de fabrication d'un pneumatique, qui comprend les étapes suivantes :
a) déposer une armature de carcasse (A) sur une surface de réception généralement plane (1),
b) retourner chacune des extrémités latérales (A', A") de l'armature de carcasse (A) une ou plusieurs fois sur elle-même,
c) poser dans le sens circonférentiel le produit semi-fini (SF) ainsi réalisé sur une surface de réception généralement cylindrique (2) en faisant un tour complet,
d) réaliser la soudure des bords opposés dans la direction circonférentielle (A1, A2) du produit semi-fini (SF),
e) et positionner respectivement une tringle (T) sur chaque retournement ainsi réalisé.

2. Procédé selon la revendication 1 dans lequel la soudure du produit semi-fini (SF) est réalisée bord à bord sur toute la longueur des extrémités à souder dudit produit.

3. Procédé selon la revendication 1, dans lequel la soudure est réalisée bord à bord pour la partie d'extrémité de chaque retournement située vers l'extérieur de l'armature de carcasse (A) et avec recouvrement pour la zone de l'armature de carcasse comprise entre ces deux zones d'extrémité.

4. Procédé selon l'une quelconque des revendications 1 à 3, dans lequel l'étape de retournement des extrémités latérales (A', A") de l'armature de carcasse (A) est précédée par la pose d'au moins un profilé de mélange caoutchouteux (P, P') sur ladite extrémité (A', A"), le retournement de cette extrémité étant réalisé autour dudit profilé de mélange caoutchouteux (P).

5. Procédé selon la revendication 4, dans lequel la soudure du profilé de mélange caoutchouteux est réalisée bord à bord.

6. Procédé selon l'une quelconque des revendications 1 à 5, dans lequel un dispositif de liaison permet de maintenir la zone de soudure du retournement de l'armature de carcasse jusqu'à la vulcanisation du pneumatique.

7. Procédé selon l'une quelconque des revendications 1 à 5, dans lequel au moins une petite bande (3), permettant de maintenir la zone de soudure du retournement de l'armature de carcasse jusqu'à la vulcanisation du pneumatique, comportant des fils parallèles entre eux dans la direction longitudinale de la bande, est collée sur la zone de soudure d'au moins un des retournements de l'armature de carcasse en disposant les fils de la petite bande dans un sens circonférentiel par rapport au tambour.

8. Procédé selon la revendication 6, dans lequel la bande (3') recouvre toute la circonférence de la zone de soudure du retournement

9. Procédé de fabrication d'un pneumatique selon la revendication 1 dans lequel l'étape de pose dans le sens circonférentiel du produit semi-fini sur une surface généralement cylindrique en faisant un tour complet est précédée des étapes suivantes :
a) déposer une partie d'une nappe de carcasse continue sur une surface de réception généralement plane,
b) retourner au moins une extrémité de cette partie de nappe sur elle-même,
c) couper à longueur le produit semi-fini ainsi réalisé.

## Patentansprüche

1. Verfahren zur Herstellung eines Luftreifens, das folgende Schritte umfasst:
a) Auflegen einer Karkassenbewehrung (A) auf eine gewöhnlich ebene Aufnahmefläche (1),
b) Umschlagen jedes der seitlichen Enden (A', A") der Karkassenbewehrung (A) ein- oder mehrmals auf sich selbst,
c) Auflegen des so hergestellten halbfertigen Produkts (SF) in Umfangsrichtung auf eine im Allgemeinen zylindrische Aufnahmefläche (2) unter Ausführung einer vollständigen Umdrehung,
d) Verschweißen der in Umfangsrichtung einander gegenüber liegenden Ränder (A1, A2) des halbfertigen Produkts (SF) und
e) Setzen jeweils eines Wulstkerns (T) auf jeden so hergestellten Umschlag.

2. Verfahren nach Anspruch 1, worin das Verschweißen des halbfertigen Produkts (SF) über die gesamte Länge der zu verschweißenden Enden des Produkts auf Stoß ausgeführt wird.

3. Verfahren nach Anspruch 1, worin das Verschweißen bei den Endabschnitten der Umschläge, die sich außen an der Karkassenbewehrung (A) befinden, jeweils auf Stoß und bei dem Bereich der Karkassenbewehrung, der zwischen diesen beiden Randbereichen liegt, mit Überlappung erfolgt.

4. Verfahren nach einem der Ansprüche 1 bis 3, worin vor dem Schritt des Umschlagens der seitlichen Enden (A', A") der Karkassenbewehrung (A) mindestens ein Profilteil (P, P') aus einer Kautschukmischung auf das Ende (A', A") gelegt wird, wobei der Umschlag des Endes um das Profilteil (P) aus der Kautschukmischung erfolgt.

5. Verfahren nach Anspruch 4, worin das Verschweißen des Profilteils aus einer Kautschukmischung auf Stoß ausgeführt wird.

6. Verfahren nach einem der Ansprüche 1 bis 5, worin der verschweißte Bereich des Umschlags der Karkassenbewehrung bis zur Vulkanisation des Luftreifens mit einer Verbindungsvorrichtung zusammen gehalten werden kann.

7. Verfahren nach einem der Ansprüche 1 bis 5, worin zumindest ein kleiner Streifen (3), der den Zusammenhalt des verschweißten Bereichs des Umschlags der Karkassenbewehrung bis zur Vulkanisation des Luftreifens ermöglicht und Fäden enthält, die in Längsrichtung des Streifens zueinander parallel sind, auf den verschweißten Bereich mindestens eines der Umschläge der Karkassenbewehrung geklebt wird, wobei die Fäden des kleinen Streifens bezogen auf die Trommel in Umfangsrichtung angeordnet werden.

8. Verfahren nach Anspruch 6, worin der Streifen (3') den gesamten Umfang des verschweißten Bereichs des Umschlags abdeckt.

9. Verfahren zur Herstellung eines Luftreifens nach Anspruch 1, worin vor dem Schritt des Auflegens des halbfertigen Produkts in Umfangsrichtung auf eine im Allgemeinen zylindrische Fläche unter Ausführung einer vollständigen Umdrehung folgende Schritte erfolgen:
a) Auflegen eines Teils einer Endloskarkassenlage auf eine gewöhnlich ebene Aufnahmefläche,
b) Umschlagen mindestens eines Endes dieses Teils der Lage auf sich selbst und
c) Ablängen des so hergestellten halbfertigen Produkts.

## Claims

1. Process for the manufacture of a tyre, comprising the following stages:
a) a carcass reinforcement (A) is placed on a generally flat receiving surface (1),
b) each lateral end (A', A") of the carcass reinforcement (A) is turned up over itself one or more times,
c) the semi-finished product (SF) so obtained is placed circumferentially on a generally cylindrical receiving surface (2) around which it makes a complete turn,
d) the edges (A1, A2) of the semi-finished product (SF) opposed in the circumferential direction are welded together,
e) and a respective bead wire (T) is placed over each upturn so formed.

2. Process according to Claim 1, in which the welding of the semi-finished product (SF) is carried out edge to edge along the whole length of the ends of the said product to be welded together.

3. Process according to Claim 1, in which the weld is made edge to edge in that part of the end of each upturn which is located towards the outside of the carcass reinforcement (A), with overlap in the zone of the carcass reinforcement located between these two end zones.

4. Process according to any of Claims 1 to 3, in which the stage of turning up the lateral ends (A', A") of the carcass reinforcement (A) is preceded by the positioning of at least one profiled element (P, P') on the said end (A', A"), the said end being turned up around the said profiled element of rubber mix (P).

5. Process according to Claim 4, in which the welding of the rubber mix profiled element is carried out edge to edge.

6. Process according to any of Claims 1 to 5, in which a linking device enables the weld zone of the upturn of the carcass reinforcement to be held together until the tyre is vulcanised.

7. Process according to any of Claims 1 to 5, in which at least one small strip (3), which enables the weld zone of the upturn of the carcass reinforcement to be held together until the tyre is vulcanised, and which comprises cords parallel to one another in the longitudinal direction of the strip, is stuck over the weld zone of at least one of the upturns of the carcass reinforcement with the cords in the small strip arranged circumferentially relative to the drum.

8. Process according to Claim 6, in which the strip (3') covers the entire circumference of the weld zone of the upturn.

9. Process for the manufacture of a tyre according to Claim 1, in which the stage of positioning the semi-finished product in the circumferential direction on a generally cylindrical surface around which it makes a complete turn, is preceded by the following stages:
a) part of a continuous carcass ply is placed on a generally flat receiving surface,
b) at least one end of this ply portion is turned up over itself,
c) the semi-finished product so obtained is cut to length.
